# EUROPEAN PATENT APPLICATION

(11) **EP 2 199 839 A1**
(43) Date of publication of application: **23.06.2010**
(21) Application number: 09179259.8
(22) Date of filing: 15.12.2009
(51) Int. Cl.: G02B 6/00, G02F 1/13357

(54) **Planar light-emitting apparatus**

(30) Priority: 17.12.2008 JP 2008320564
(71) Applicant: Sony Corporation, Tokyo (JP)
(72) Inventor: Tanahashi, Makoto, Tokyo (JP)
(74) Representative: Thévenet, Jean-Bruno

(57) **Abstract**

A planar light-emitting apparatus includes a light source, a light-guiding member (2) configured to allow light from the light source to propagate therethrough, a reflecting member (1) disposed such that the reflecting member (1) faces the light-guiding member (2), the reflecting member (1) reflecting the light propagating through the light-guiding member (2), and an adhesive member (12) configured to attach the light-guiding member (2) and the reflecting member (1) to each other. A distribution of an adhesive region of the adhesive member (12) on a surface (2b) of the light-guiding member (2) is determined on the basis of a brightness distribution of the planar light-emitting apparatus in the case where the adhesive member (12) is uniformly distributed on the surface of the light-guiding member (2), and the adhesive member (12) is formed between the light-guiding member (2) and the reflecting member (1) in accordance with the distribution of the adhesive region.

## Description

### BACKGROUND OF THE INVENTION

### 1. Field of the Invention

The present invention relates to planar light-emitting apparatuses, and more particularly, to a planar light-emitting apparatus in which brightness unevenness in gradation on a display surface is reduced.

### 2. Description of the Related Art

Recently, liquid-crystal display apparatuses have come into widespread use. The liquid crystal display apparatuses display images by controlling the transmittance of light incident on a liquid crystal panel at each pixel. Therefore, the liquid crystal panel is generally provided with a backlight which causes light to be incident on the liquid crystal panel (see, for example, Japanese Unexamined Patent Application Publication No. 11-174976).

### SUMMARY OF THE INVENTION

However, in the case where a backlight according to the related art is used, there is a possibility that brightness unevenness in gradation will occur on a display surface of the liquid crystal display apparatus. Therefore, there has been a demand to reduce the brightness unevenness in gradation on the display surface of the liquid crystal display apparatus. However, the demand has not been fully satisfied.

In view of the above-described situation, it is desirable to reduce the brightness unevenness in gradation on a display surface.

A planar light-emitting apparatus according to a first embodiment of the present invention includes a light source; a light-guiding member configured to allow light from the light source to propagate therethrough; a reflecting member disposed such that the reflecting member faces the light-guiding member, the reflecting member reflecting the light propagating through the light-guiding member; and an adhesive member configured to attach the light-guiding member and the reflecting member to each other. A distribution of an adhesive region of the adhesive member on a surface of the light-guiding member is determined on the basis of a brightness distribution of the planar light-emitting apparatus in the case where the adhesive member is uniformly distributed on the surface of the light-guiding member, and the adhesive member is formed between the light-guiding member and the reflecting member in accordance with the distribution of the adhesive region.

The adhesive member may be formed such that the density of the adhesive region of the adhesive member on the light-guiding member increases as a distance from the light source increases.

The adhesive member may include a plurality of dot-shaped adhesive spacers, and the adhesive member may be formed such that a dot area of the adhesive spacers increases as the distance from the light source increases.

The adhesive member may include a plurality of line-shaped adhesive spacers, and the adhesive member may be formed such that a line width of the adhesive spacers increases as a distance from the light source increases.

A predetermined pattern including recesses and protrusions may be formed on the light-guiding member.

According to the first embodiment of the present invention, the planar light-emitting apparatus includes a light source; a light-guiding member configured to allow light from the light source to propagate therethrough; a reflecting member disposed such that the reflecting member faces the light-guiding member, the reflecting member reflecting the light propagating through the light-guiding member; and an adhesive member configured to attach the light-guiding member and the reflecting member to each other. A distribution of an adhesive region of the adhesive member on a surface of the light-guiding member is determined on the basis of a brightness distribution of the planar light-emitting apparatus in the case where the adhesive member is uniformly distributed on the surface of the light-guiding member, and the adhesive member is formed between the light-guiding member and the reflecting member in accordance with the distribution of the adhesive region.

A planar light-emitting apparatus according to a second embodiment of the present invention includes a light source; a light-guiding member configured to allow light from the light source to propagate therethrough; a reflecting member configured to reflect the light propagating through the light-guiding member; an optical member disposed such that the optical member faces the light-guiding member; and an adhesive member configured to attach the light-guiding member and the optical member to each other. A distribution of an adhesive region of the adhesive member on a surface of the light-guiding member is determined on the basis of a brightness of the light after the light is reflected by the reflecting member in the case where the adhesive member is not disposed or on the basis of a brightness distribution of the planar light-emitting apparatus in the case where the adhesive member is uniformly distributed on the surface of the light-guiding member, and the adhesive member is formed between the light-guiding member and the optical member in accordance with the distribution of the adhesive region.

A predetermined pattern including recesses and protrusions may be formed on the light-guiding member.

According to the second embodiment of the present invention, the planar light-emitting apparatus includes a light source; a light-guiding member configured to allow light from the light source to propagate therethrough; a reflecting member configured to reflect the light propagating the light-guiding member; an optical member disposed such that the optical member faces the light-guiding member; and an adhesive member configured to attach the light-guiding member and the optical member to each other. A distribution of an adhesive region of the adhesive member on a surface of the light-guiding member is determined on the basis of a brightness distribution of the planar light-emitting apparatus in the case where the adhesive member is uniformly distributed on the surface of the light-guiding member, and the adhesive member is formed between the light-guiding member and the optical member in accordance with the distribution of the adhesive region.

Thus, according to the embodiments of the present invention, the brightness unevenness in gradation on the display surface can be reduced.

### BRIEF DESCRIPTION OF THE DRAWINGS

Fig. 1 is a diagram illustrating an exemplary structure of a backlight which functions as a planar light-emitting apparatus according to an embodiment of the present invention;
Figs. 2A and 2B are diagrams illustrating the structure of an optical waveguide and a reflecting plate included in a backlight according to a related art;
Fig. 3 is a diagram illustrating the state in which there is a brightness unevenness in gradation on a display surface of a liquid crystal display apparatus according to the related art;
Fig. 4 is a diagram illustrating an exemplary structure of a section including a reflecting plate and an optical waveguide to which a technique according to an embodiment of the present invention is applied;
Figs. 5A and 5B are diagrams respectively illustrating the sates before and after the optical waveguide on which adhesive spacers are formed and the reflecting plate are attached to each other;
Figs. 6A and 6B are diagrams respectively illustrating the sates before and after the reflecting plate on which adhesive spacer dots are formed and the optical waveguide are attached to each other;
Fig. 7 is a diagram illustrating an example of the external structure at a lower surface side of the optical waveguide on which the adhesive spacer dots are formed;
Fig. 8 is an example of a graph of the dot diameter of the adhesive spacer dots;
Fig. 9 is a diagram illustrating an example of the external structure at a lower surface side of the optical waveguide on which adhesive spacer lines are continuously formed;
Fig. 10 is an example of a graph of the line width of the adhesive spacer lines;
Fig. 11 is a diagram illustrating the structure of an optical waveguide and a reflecting plate included in a backlight according to the related art;
Fig. 12 is a diagram illustrating the brightness distribution on a display surface of a liquid crystal display apparatus according to the related art including the structure shown in Fig. 11;
Fig. 13 is a diagram illustrating an example of the external structure at a lower surface side of the optical waveguide on which adhesive spacers are formed in place of both-sided adhesive tape;
Fig. 14 is a diagram illustrating an example different from the example shown in Fig. 1 of the structure of a backlight which functions as a planar light-emitting apparatus according to an embodiment of the present invention;
Fig. 15 is a diagram illustrating the brightness distribution on a display surface of a liquid crystal display apparatus including a backlight according to the related art which includes LEDs as a light source; and
Fig. 16 is a diagram illustrating an example of the external structure at a lower surface side of the optical waveguide included in a backlight having the structure shown in Fig. 14.

### DESCRIPTION OF THE PREFERRED EMBODIMENTS

### 1. Planar light-emitting apparatus according to first embodiment of the present invention

### Exemplary structure of backlight which functions as planar light-emitting apparatus according to first embodiment

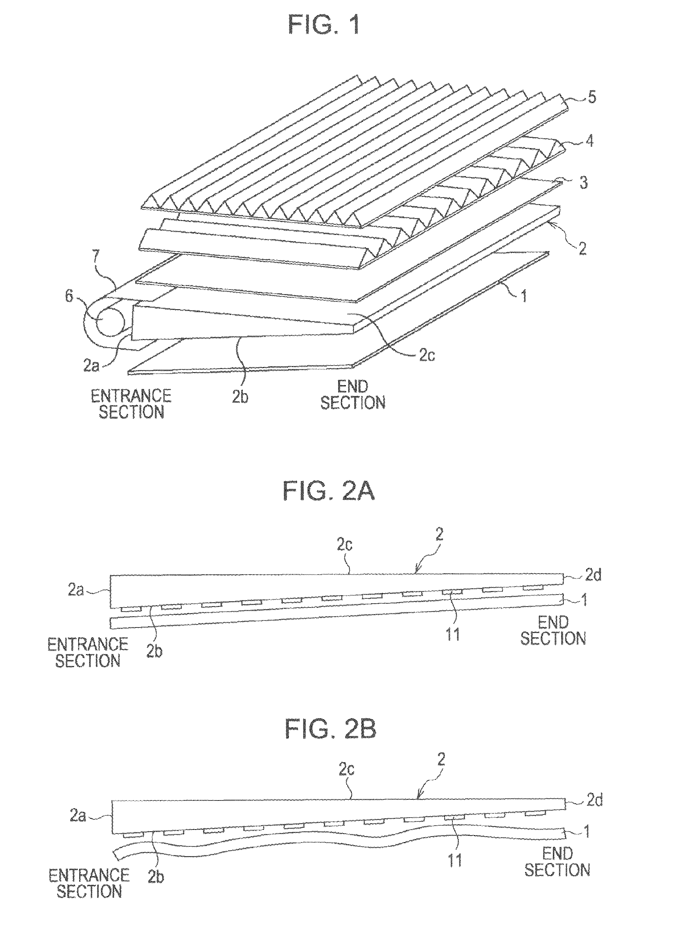

Fig. 1 is a diagram illustrating an exemplary structure of a backlight which functions as a planar light-emitting apparatus according to an embodiment of the present invention. The backlight is included in a liquid crystal display apparatus included in, for example, a notebook personal computer.

The backlight shown in Fig. 1 includes a reflecting plate 1, an optical waveguide 2, a diffusing sheet 3, a vertical prism sheet 4, a horizontal prism sheet 5, a cold-cathode tube 6, and a reflector 7.

The optical waveguide 2 has a so-called wedge shape. The cold-cathode tube 6 is disposed near a side surface 2a (left side surface 2a in Fig. 1) of the optical waveguide 2. The cold-cathode tube 6 functions as a light source and is provided with the reflector 7. Thus, the optical waveguide 2 is structured such that light emitted from the light source is incident on the side surface 2a and is guided to the inner section of the optical waveguide 2.

The reflecting plate 1 is disposed at a lower surface 2b (lower surface 2b at the lower side in Fig. 1), which is one of surfaces that are perpendicular to the side surface 2a of the optical waveguide 2. The diffusing sheet 3, which serves to reduce brightness unevenness, is disposed at an upper surface 2c of the optical waveguide 2 which faces the lower surface 2b thereof. The vertical prism sheet 4 and the horizontal prism sheet 5, which serve to increase the brightness, are stacked on the diffusing sheet 3 at the upper side thereof in Fig. 1 in that order from the lower side. The vertical prism sheet 4 and the horizontal prism sheet 5 are stacked together such that the ridges of prisms included therein extend perpendicular to each other.

To facilitate understanding of the embodiments of the present invention, the structure of the related art described in the Background of the Invention section and the Summary of the Invention section will be described in more detail.

### Structure of optical waveguide and reflecting plate according to related art

Figs. 2A and 2B are diagrams illustrating the structure of an optical waveguide and a reflecting plate included in a backlight according to the related art.

Referring to Figs. 2A and 2B, in an optical waveguide 2 having a lower surface 2b, an upper surface 2c, and an inner section therebetween, a section at a side-surface-2a side at the left side in Figs. 2A and 2B, where the light source is disposed, is hereinafter referred to as an entrance section. In addition, in the optical waveguide 2 having the lower surface 2b, the upper surface 2c, and the inner section therebetween, a section at the side of a side surface 2d which faces the side surface 2a, that is, at a side-surface-2d side at the right side in Figs. 2A and 2B, is hereinafter referred to as an end section. Light from the light source is guided from the entrance section to the end section through the inner section of the optical waveguide 2.

As shown in Fig. 2A, also in the backlight according to the related art, a reflecting plate 1 is disposed at the lower-surface-2b side of the optical waveguide 2. A pattern 11 formed by printing or molding is provided on the lower surface 2b of the optical waveguide 2. The pattern 11 has a function of diffusing the light from the light source toward a backlight surface to make the brightness uniform. Therefore, the area of the pattern 11 increases toward the end section.

Fig. 2B shows the state of the optical waveguide 2 and the reflecting plate 1 according to the related art shown in Fig. 2A after they are subjected to a high-temperature high-humidity storage test. As shown in Fig. 2B, during the high-temperature high-humidity condition storage test, the shape of the reflecting plate 1 changes into an undulated shape. The reflecting plate 1 includes a base plate (hereinafter referred to as a base) as a base member thereof. The base is generally made of polyethylene terephthalate (PET), and is subjected to a process for improving the reflection efficiency. More specifically, since the base is made of resin, the base expands and is deformed into the undulated shape in the high-temperature high-humidity storage test. The deformation into the undulated shape causes the brightness unevenness in gradation on a display surface of a liquid crystal display apparatus.

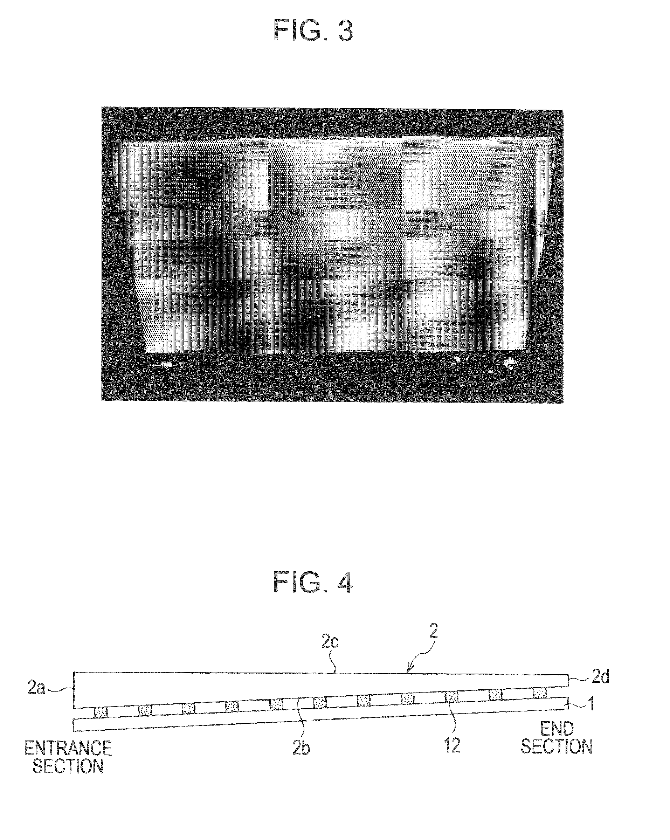

Fig. 3 shows the state in which there is a brightness unevenness in gradation on the display surface of the liquid crystal display apparatus according to the related art due to the deformation of the reflecting plate 1 according to the related art into the undulated shape.

To reduce the brightness unevenness in gradation on the display surface of the liquid crystal display apparatus, the inventor of the present invention has invented a technique (hereinafter referred to as a technique according to an embodiment of the present invention) of integrating the reflecting plate 1 and the optical waveguide 2 together. According to this technique, deformation of the reflecting plate into the undulated shape can be prevented. As a result, the brightness unevenness in gradation on the display surface of the liquid crystal display apparatus can be reduced. Exemplary structure of section including reflecting plate and optical waveguide in backlight according to embodiment of present invention

Fig. 4 is a diagram illustrating an exemplary structure of a section including the reflecting plate 1 and the optical waveguide 2 to which the technique according to the embodiment of the present invention is applied in the backlight having the structure shown in Fig. 1.

In the example shown in Fig. 4, the reflecting plate 1 is attached to the lower surface 2b of the optical waveguide 2 by adhesive spacers 12. In other words, the adhesive spacers 12 are provided between the reflecting plate 1 and the optical waveguide 2 in place of the pattern 11 (see Figs. 2A and 2B) formed on the lower surface 2b of the optical waveguide 2 in the structure of the related art. Similar to the pattern 11 according to the related art, the adhesive spacers 12 are also formed such that the area thereof increases toward the end section. More specifically, the adhesive spacers 12 are formed in an island-shaped pattern or a line-shaped pattern, and serve to attach the reflecting plate 1 and the optical waveguide 2 to each other while maintaining a constant gap therebetween. In other words, the adhesive spacers 12 have not only a function of adhering the reflecting plate 1 to the lower surface 2b of the optical waveguide 2 but also a function similar to that of the pattern 11 according to the related art, that is, a function of diffusing the light from the light source toward the backlight surface to make the brightness uniform.

Thus, in the section including the reflecting plate 1 and the optical waveguide 2 to which the technique according to an embodiment of the present invention is applied, the reflecting plate 1 and the optical waveguide 2 are attached to each other and integrated with each other by the adhesive spacers 12 having an additional function of diffusing the light from the light source toward the backlight surface to make the brightness uniform. In the case where the backlight having the structure shown in Fig. 1 includes the above-described section, even if the backlight is placed in a high-temperature high-humidity environment (even if, for example, the high-temperature high-humidity storage test shown in Fig. 2B is performed), the degree of deformation of the reflecting plate 1 into the undulated shape can be significantly reduced. As a result, the brightness unevenness in gradation on the display surface of the liquid crystal display apparatus can be reduced.

In the state in which the reflecting plate 1 and the optical waveguide 2 are not yet attached to each other, the adhesive spacers 12 may be formed on either one of the reflecting plate 1 and the optical waveguide 2. In addition, the shape of the pattern of the adhesive spacers 12 is not particularly limited.

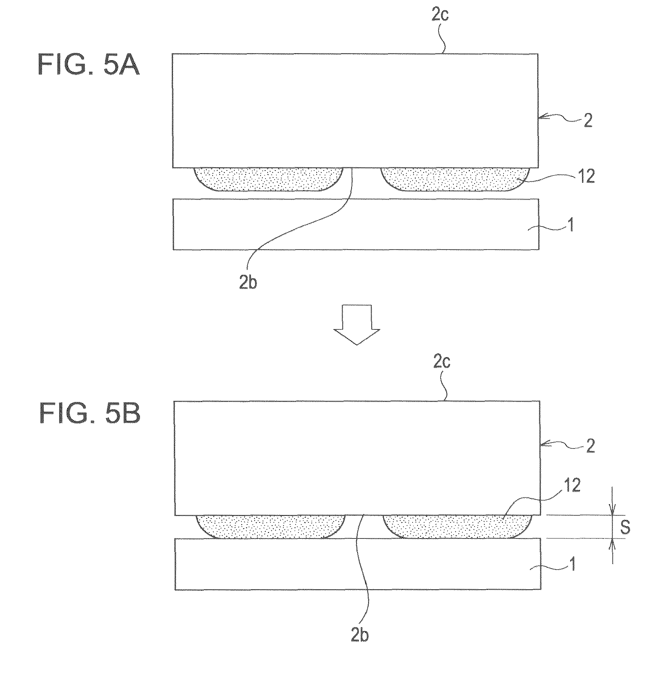

Figs. 5A and 5B are diagrams respectively illustrating the sates before and after the optical waveguide 2 on which the adhesive spacers 12 are formed and the reflecting plate 1 are attached to each other.

### Example of adhesive spacer dots

To facilitate understanding of the embodiments of the present embodiment, an example in which the adhesive spacers 12 are formed in a dot-shaped pattern will be described with reference to Figs. 5A to 8. In the following description, the dot-shaped adhesive spacers 12 are referred to as adhesive spacer dots 12. The adhesive spacer dots 12 may be made of, for example, the same type of material as the material of the optical waveguide 2 (generally an acrylic resin).

Fig. 5A shows the state before the reflecting plate 1 and the optical waveguide 2 are attached to each other. As shown in Fig. 5A, the adhesive spacer dots 12 are formed on the lower surface 2b of the optical waveguide 2.

Fig. 5B shows the state after the reflecting plate 1 and the optical waveguide 2 are attached to each other. In the state in which the reflecting plate 1 and the optical waveguide 2 are attached to each other, the thickness S of the adhesive spacer dots 12 is about 40 µm in the present embodiment. However, the thickness of the adhesive spacer dots 12 is not limited to this.

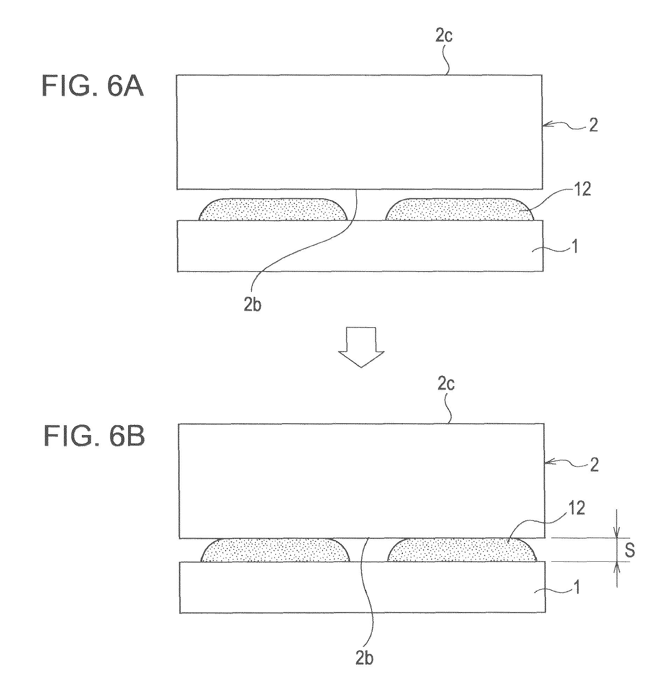

Figs. 6A and 6B are diagrams respectively illustrating the sates before and after the reflecting plate 1 on which the adhesive spacer dots 12 are formed and the optical waveguide 2 are attached to each other.

Fig. 6A shows the state before the reflecting plate 1 and the optical waveguide 2 are attached to each other. As shown in Fig. 6A, the adhesive spacer dots 12 are formed on the reflecting plate 1.

Fig. 6B shows the state after the reflecting plate 1 and the optical waveguide 2 are attached to each other. In the state in which the reflecting plate 1 and the optical waveguide 2 are attached to each other, the thickness S of the adhesive spacer dots 12 is about 40 µm in the present embodiment. However, the thickness of the adhesive spacer dots 12 is not particularly limited to this.

In addition, the area of each of the adhesive spacer dots 12 is also not particularly limited. However, as described above, the adhesive spacer dots 12 are formed such that the area thereof increases toward the end section.

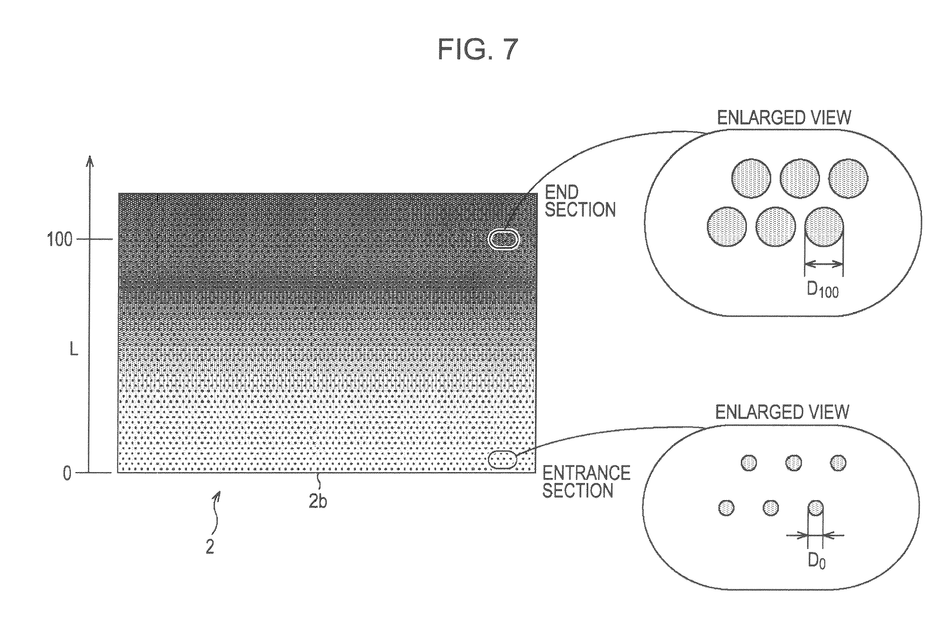

Fig. 7 shows an example of the external structure at the lower-surface-2b side of the optical waveguide 2 on which the adhesive spacer dots 12 are formed such that the area thereof increases toward the end section.

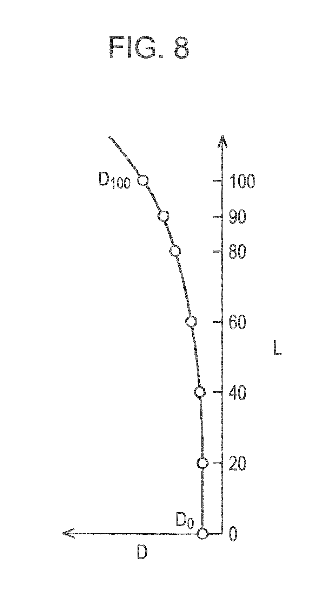

More specifically, as shown in Fig. 7, to diffuse the light from the light source toward the backlight surface and make the brightness uniform, the adhesive spacer dots 12 are formed such that the area of the dot-shaped adhesive spacer dots 12 per unit area (hereinafter referred to as a dot area) is at a minimum at the entrance section and gradually increases toward the end section. Specifically, for example, the area varies as shown in Fig. 8.

Fig. 8 shows an example of the diameter of the dot-shaped adhesive spacer dots 12 (hereinafter referred to as a dot diameter) in the case where L is a relative distance from the entrance section. As is clear from Fig. 8, the dot diameter D increases, that is, the dot area increases, as the relative distance L increases.

In Fig. 8, the dot diameter Do shows the dot diameter of the adhesive spacer dots 12 in one of the enlarged views shown in Fig. 7, that is, in the enlarged view of an area near the entrance section where L = 0 (the enlarged view in the lower right section of Fig. 7).

In Fig. 8, the dot diameter D₁₀₀ shows the dot diameter of the adhesive spacer dots 12 in the other one of the enlarged views shown in Fig. 7, that is, in the enlarged view of an area near the end section where L = 100 (the enlarged view in the upper right section of Fig. 7).

### Example of adhesive spacer lines

In the example illustrated in Figs. 5A to 8, the adhesive spacer dots 12 are provided. However, as described above, the shape of the pattern of the adhesive spacers 12 is not particularly limited. For example, the pattern of the adhesive spacers 12 may also be shaped such that the adhesive spacers 12 have a line shape whose width is at a maximum width at the end section and decreases toward the entrance section. In the following description, the line-shaped adhesive spacers 12 are referred to as adhesive spacer lines 12. The adhesive spacer lines 12 may be made of, for example, the same type of material as the material of the optical waveguide 2 (generally an acrylic resin).

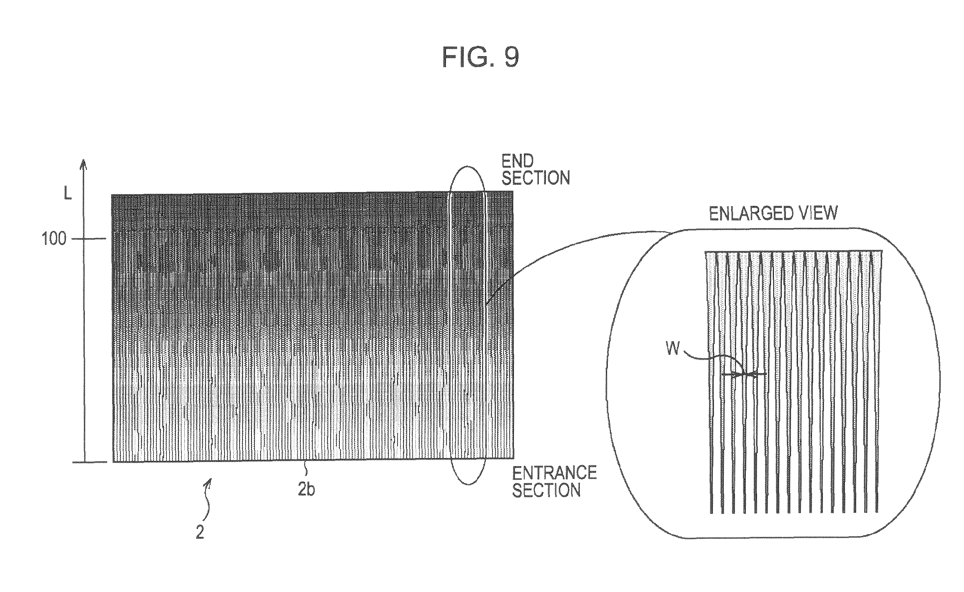

Fig. 9 shows an example of the external structure at the lower-surface-2b side of the optical waveguide 2 on which the adhesive spacer lines 12 are formed continuously in the horizontal direction in the figure (direction perpendicular to the direction from the end section to the entrance section).

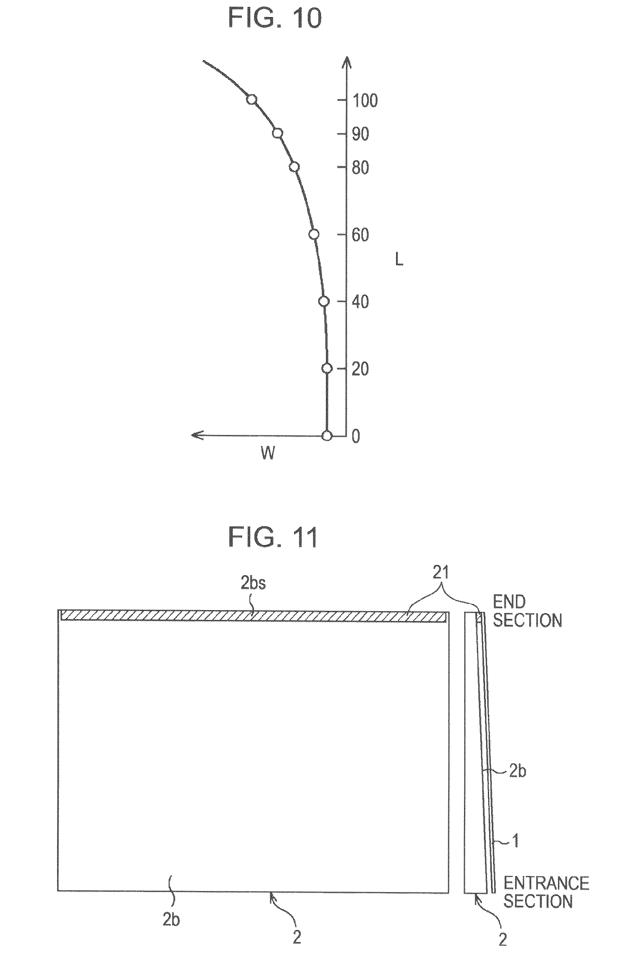

More specifically, as shown in Fig. 9, to diffuse the light from the light source toward the backlight surface and make the brightness uniform, the adhesive spacer lines 12 are formed such that the width of the adhesive spacer lines 12 (hereinafter referred to as a line width W) gradually increases in a direction from the entrance section to the end section. More specifically, the line width W of the adhesive spacer lines 12 is small in an area near the entrance section, and the line width W increases toward the end section. The line width W of the adhesive spacer lines 12 is at a minimum at the entrance section and gradually increases toward the end section. Specifically, for example, the line width W varies as shown in Fig. 10.

Fig. 10 shows an example of the adhesive spacer line width W in the case where L is a relative distance from the entrance section. As is clear from Fig. 10, the line width W increases as the relative distance L increases.

In other words, the area occupied by each adhesive spacer line 12 in the corresponding region (hereinafter referred to as an occupation area) is proportional to the line width W. Therefore, the occupation area is at a minimum at the entrance section and gradually increases toward the end section.

In the above description, the adhesive spacer dots 12 and the adhesive spacer lines 12 are explained as examples of adhesive spacers 12. However, as described above, the shape of the pattern of the adhesive spacers 12 is not particularly limited.

In a region of the lower surface 2b of the optical waveguide 2 where the brightness will be low if the adhesive spacers 12 are uniformly distributed, it is preferable that the adhesive spacers 12 be densely arranged to improve the reflection efficiency. More specifically, in a region where the brightness will be low, the adhesion area of the adhesive spacers 12 is preferably increased to increase the brightness. The "region where the brightness will be low if the adhesive spacers 12 are uniformly distributed" is, for example, a region distant from the light source. Therefore, preferably, the shape of the pattern of the adhesive spacers 12 is determined such that the adhesion area increases, that is, such that the adhesive spacers 12 are more densely arranged, as the distance from the light source increases.

In other words, the distribution of adhesive regions of the adhesive spacers 12 on the lower surface 2b of the optical waveguide 2 is preferably determined on the basis of the brightness distribution on the backlight surface in the case where the adhesive spacers 12 are uniformly distributed on the lower surface 2b of the optical waveguide 2. Then, the shape of the pattern of the adhesive spacers 12 may be determined in accordance with the distribution of the adhesive regions.

As described above, the planar light-emitting apparatus according to the embodiment of the present invention has the structure in which the reflecting plate 1 and the optical waveguide 2 are integrated with each other by the adhesive spacers 12. Therefore, the following advantages can be obtained.

That is, as described above, in the structure of the backlight according to the related art, the reflecting plate 1 is arranged independently at the lower-surface-2b side of the optical waveguide 2. Therefore, if the reflecting plate 1 expands due to, for example, heat, the reflecting plate 1 is easily deformed into the undulated shape. The thus-formed undulated shape causes the brightness unevenness in gradation on the display surface of the liquid crystal display apparatus. In contrast, in the planar light-emitting apparatus according to the embodiment of the present invention, the reflecting plate 1 and the optical waveguide 2 are integrated with each other by the adhesive spacers 12. Therefore, a first advantage that the reflecting plate 1 is not easily deformed into an undulated shape due to heat or the like can be obtained. As a result, the brightness unevenness in gradation on the display surface of the liquid crystal display apparatus can be reduced.

In addition, in the structure of the backlight according to the related art, there is a risk that the reflecting plate 1 and the optical waveguide 2 will partially adhere to each other. The adhesion between the reflecting plate 1 and the optical waveguide 2 also leads to the brightness unevenness in gradation on the display surface of the liquid crystal display apparatus. In other words, the portions which adhere to each other cause the brightness unevenness in gradation on the display surface of the liquid crystal display apparatus. In contrast, in the planar light-emitting apparatus according to the embodiment of the present invention, the partial adhesion between the reflecting plate 1 and the optical waveguide 2 basically does not occur due to the structure of the light-emitting apparatus. This is a second advantage. As a result, the brightness unevenness in gradation on the display surface of the liquid crystal display apparatus can be reduced.

In addition, in the structure of the backlight according to the related art, it is necessary to reduce the thickness of the reflecting plate 1 to reduce the weight and thickness of the backlight. However, since the reflecting plate 1 will be deformed into the undulated shape due to heat as described above, there is a limit to reducing the thickness of the reflecting plate 1. In contrast, in the planar light-emitting apparatus according to the embodiment of the present invention, as described above, the reflecting plate 1 is not easily deformed into the undulated shape. Therefore, the thickness of the reflecting plate 1 can be reduced accordingly. Thus, a third advantage that the weight and thickness of the backlight can be reduced can be obtained.

In addition, in the structure of the backlight according to the related art, the pattern 11 is formed on the optical waveguide 2 by printing or molding, and the adjustment for making the brightness uniform is performed by adjusting the area and density of the pattern 11. In contrast, in the planar light-emitting apparatus according to the embodiment of the present invention, the adhesive spacers 12 which attach the reflecting plate 1 and the optical waveguide 2 to each other serve to diffuse the light from the light source toward the backlight surface. Thus, a fourth advantage can be obtained that the adhesive spacers 12 have two functions: a function of adhering the reflecting plate 1 and the optical waveguide 2 to each other and a function of making the brightness uniform.

In addition, in the structure of the backlight according to the related art, the adjustment for making the brightness uniform is performed by adjusting the area and density of the pattern 11 formed by printing or molding. The pattern 11 formed by printing or molding is formed using a shaping die in the process of forming the optical waveguide 2. Therefore, the adjustment for making the brightness uniform is performed by changing the shaping die. This takes a long time and high costs are incurred. In contrast, in the planar light-emitting apparatus according to the embodiment of the present invention, the adhesive spacers 12 which attach the reflecting plate 1 and the optical waveguide 2 to each other can, for example, also be formed by silk screen printing. In this case, a fifth advantage that the pattern of the adhesive spacers 12 can be changed within a relatively short time at a low cost can be obtained.

### Example of partial adhesion between reflecting plate and optical waveguide

In the above-described planar light-emitting apparatus according to the embodiment of the present invention, the reflecting plate 1 and the optical waveguide 2 are attached to each other over the entire region thereof. However, the adhesion between the reflecting plate 1 and the optical waveguide 2 may also be partial.

However, the method itself in which the reflecting plate 1 and the optical waveguide 2 are only partially attached to each other has already been used in the structure according to the related art, as shown in Fig. 11.

### Exemplary structure of reflecting plate and optical waveguide of related art

Fig. 11 is a diagram illustrating the structure of an optical waveguide and a reflecting plate included in a backlight according to the related art. The backlight shown in Figs. 11 to 13 includes a cold-cathode tube 6 as a light source.

In the backlight according to the related art, the reflecting plate 1 and the optical waveguide 2, which has the pattern 11 (not shown in Fig. 11) formed on the lower surface 2b of the optical waveguide 2 in the molding process, are fixed to each other by double-sided tape 21 along one side 2bs of the lower surface 2b having four sides.

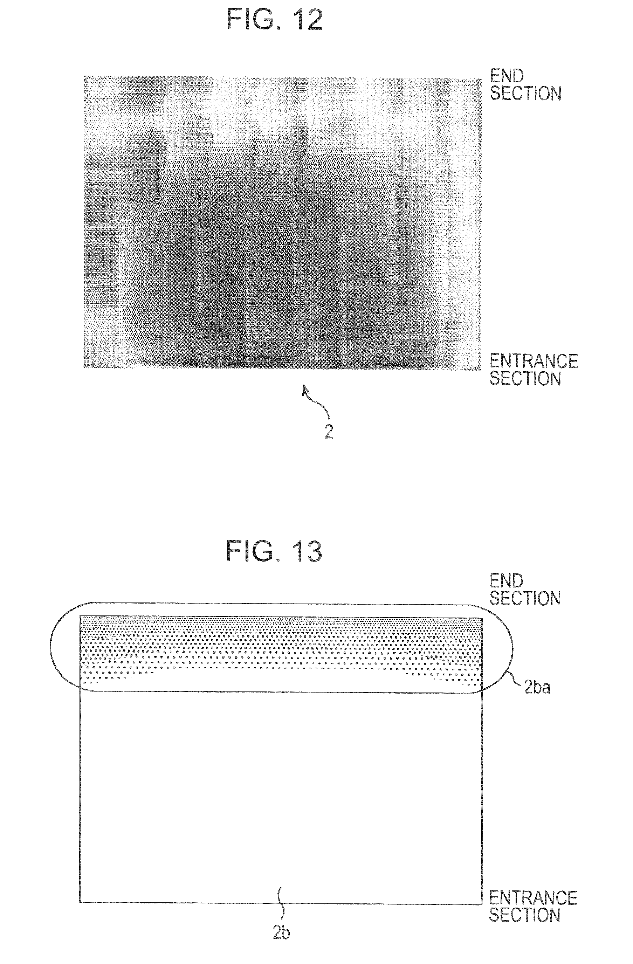

The brightness distribution on a display surface of a liquid crystal display apparatus in this case is shown in Fig. 12.

Fig. 12 is a diagram illustrating the brightness distribution on the display surface of the liquid crystal display apparatus according to the related art including the structure shown in Fig. 11.

As is clear from Fig. 12, although the brightness is high in a central region near the entrance section, the brightness is low in a region near the end section. The brightness unevenness in gradation occurs due to the difference in brightness between these regions.

Therefore, it is desirable to obtain a uniform brightness distribution on the display surface of the liquid crystal display apparatus. To obtain a uniform brightness distribution, adhesive spacers 12 formed in a pattern shown in Fig. 13, for example, can be used in place of the double-sided tape 21. Although the pattern 11 is not shown in Fig. 13, the pattern 11 may either be formed on the upper surface 2c or the lower surface 2b of the optical waveguide 2.

### Example of adhesive spacers used in place of double-sided tape

Fig. 13 shows an example of the external structure at the lower-surface-2b side of the optical waveguide 2 on which the adhesive spacer lines 12 are formed in place of the both-sided adhesive tape 21.

As shown in Fig. 13, the adhesive spacer dots 12 are formed on the lower surface 2b of the optical waveguide 2 only in a region 2ba near the end section. In this case, according to the related art, the brightness decreases as the distance to the end section decreases within the region 2ba. Therefore, the adhesive spacer dots 12 are formed such that the dot diameter increases, that is, the dot area increases, as the distance to the end section decreases.

Thus, within the region 2ba, the adhesion area of the adhesive spacer dots 12 increases, that is, the distribution density increases, as the distance to the end section decreases. As a result, in the region 2ba, the light from the light source is evenly diffused toward the backlight surface, and a uniform brightness distribution can be obtained. The shape of the pattern of the adhesive spacers 12 formed within the region 2ba is not limited to the dot shape described in the example shown in Fig. 13, and may be an arbitrary shape, such as a line shape described in the example shown in Figs. 9 and 10. More specifically, the shape of the pattern of the adhesive spacers 12 may be any shape as long as the adhesion area increases, that is, the distribution density increases, as the distance to the end section decreases (as the brightness decreases in the structure of the related art) in the region 2ba.

As described above, the reflecting plate 1 and the optical waveguide 2 are attached to each other by the adhesive spacers 12 instead of the double-sided tape 21. As a result, an advantage that the double-sided tape 21 can be omitted can be obtained. Instead of forming the adhesive spacers 12 only in the adhesion section (the region 2ba in the above-described example) of the double-sided tape 21, the adhesive spacers 12 may, of course, also be formed over the entire region between the reflecting plate 1 and the optical waveguide 2. Also in this case, the advantage that the double-sided tape 21 can be omitted can, of course, be obtained.

The backlight including the cold-cathode tube 6 provided with the reflector 7 as the light source has been described as the planar light-emitting apparatus according to the first embodiment of the present invention. Next, a backlight including light emitting diodes (LEDs) as the light source will be described as a planar light-emitting apparatus according to a second embodiment of the present invention.

### 2. Planar light-emitting apparatus according to second embodiment of present invention

### Exemplary structure of backlight which functions as planar light-emitting apparatus according to second embodiment

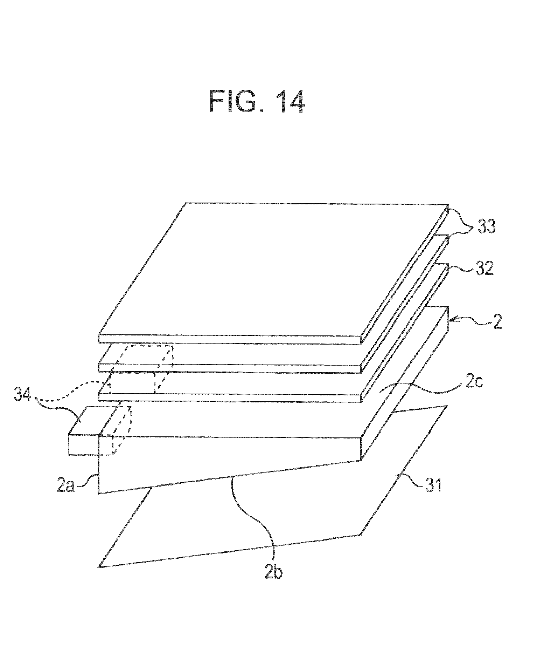

Fig. 14 is a diagram illustrating an exemplary structure of a backlight which functions as a planar light-emitting apparatus according to an embodiment of the present invention. The backlight is included in a liquid crystal display apparatus included in, for example, a notebook personal computer. This example is different from the example shown in Fig. 1.

The backlight shown in Fig. 14 includes a reflecting sheet 31, an optical waveguide 2, a diffusing film 32, a prism sheet 33, and LEDs 34.

The LEDs 34 are disposed near a side surface 2a (left side surface 2a in Fig. 14) of the optical waveguide 2. Thus, the optical waveguide 2 is structured such that light emitted from the light source is incident on the side surface 2a and is guided to the inner section of the optical waveguide 2.

The reflecting sheet 31 is disposed at a lower-surface-2b side of the optical waveguide 2. The diffusing film 32, which serves to reduce brightness unevenness, is disposed at an upper-surface-2c side of the optical waveguide 2. In addition, the prism sheet 33, which serves to increase the brightness, is disposed at the upper side of the diffusing film 32 in Fig. 14.

A backlight which includes the LEDs 34 as the light source has been used in the structure of the related art.

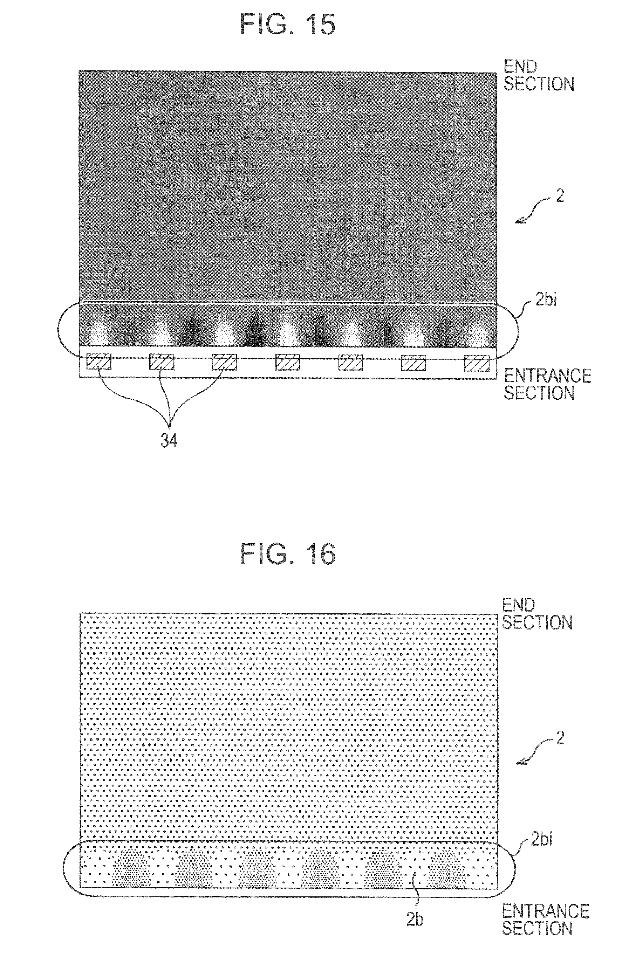

Fig. 15 is a diagram illustrating the brightness distribution on a display surface of the liquid crystal display apparatus including the backlight according to the related art which includes the LEDs 34 as a light source. In the example shown in Fig. 15, the brightness increases as the density of gray decreases (as the color becomes closer to white). Here, it is to be noted that the relationship between the density of gray and the brightness in the example shown in Fig. 15 is inverted from that in the example shown in Fig. 12. The number of LEDs 34 is seven in the example shown in Fig. 15 and Fig. 16, which will be described below. However, the number of LEDs 34 varies in accordance with the area of the display surface, and is not particularly limited.

As shown in Fig. 15, there is a brightness unevenness in gradation on the lower surface 2b of the optical waveguide 2 in a region 2bi near the entrance section. More specifically, in the region 2bi, the brightness is high in regions near the LEDs 34 but is low in regions between the LEDs 34. The brightness unevenness in gradation occurs due to the difference in brightness between these regions.

Therefore, it is desirable to obtain a uniform brightness distribution on the display surface of the liquid crystal display apparatus. To obtain a uniform brightness distribution, adhesive spacers 12 formed in a pattern shown in Fig. 16, for example, can be used.

### Example of adhesive spacers

Fig. 16 shows an example of the external structure at the lower-surface-2b side of the optical waveguide 2 included in the backlight having the structure shown in Fig. 14.

As shown in Fig. 16, in the region 2bi where the brightness unevenness occurs in the structure of the related art, the adhesive spacer dots 12 having large dot area (large dot diameter) are uniformly arranged in regions where the brightness is low in the structure of the related art (regions between the LEDs 34). In contrast, the adhesive spacer dots 12 having small dot area (small dot diameter) are uniformly arranged in regions where the brightness is high in the structure of the related art (regions near the LEDs 34).

Thus, within the region 2bi, the adhesion area of the adhesive spacer dots 12 is large in regions where the adhesive spacer dots 12 having large dot area are uniformly arranged (regions between the LEDs 34 where the brightness is low in the structure of the related art). In other words, in these regions, the distribution density of the adhesive spacer dots 12 is high. In contrast, the adhesion area of the adhesive spacer dots 12 is small in regions where the adhesive spacer dots 12 having small dot area are uniformly arranged (regions near the LEDs 34 where the brightness is high in the structure of the related art). In other words, in these regions, the distribution density of the adhesive spacer dots 12 is low. As a result, also in the region 2bi, the light from each LED 34 is evenly diffused toward the backlight surface, and a uniform brightness distribution can be obtained.

In a region other than the region 2bi on the lower surface 2b of the optical waveguide 2, the brightness is uniform in the structure of the related art. Therefore, in the example shown in Fig. 16, the adhesive spacer dots 12 having the same dot area (same dot diameter) are uniformly arranged.

The shape of the pattern of the adhesive spacers 12 formed within the region 2bi is not limited to the dot shape illustrated in the example shown in Fig. 16, and may be an arbitrary shape, such as a line shape illustrated in the example shown in Figs. 9 and 10. More specifically, the shape of the pattern of the adhesive spacers 12 may be any shape as long as the adhesion area is large (the distribution density is high) in regions between the LEDs 34 where the brightness is low in the structure of the related art and the adhesion area is small (the distribution density is low) in regions between the LEDs 34 where the brightness is high in the structure of the related art.

The application of the above-described structure is not limited to the example shown in Fig. 16, and the structure in which the adhesive spacers 12 are formed on the lower surface 2b of the optical waveguide 2 in a manner similar to that in the example shown in Fig. 16 may be used in any case in which the brightness gradation will occur if no measure is taken. More specifically, the shape of the pattern of the adhesive spacers 12 may be determined such that the distribution density of the adhesive spacers 12 is adjusted in accordance with the difference in brightness which will occur if the adhesive spacers 12 are uniformly arranged. In other words, the brightness gradation can be adjusted and corrected simply by changing the shape of the pattern of the adhesive spacers 12. The shape of the pattern of the adhesive spacers 12 can be changed by changing a mask of a printing pattern. Therefore, the brightness gradation can be easily adjusted and corrected.

The examples in which the adhesive spacers 12 are formed on the lower surface 2b of the optical waveguide 2 in a certain pattern are described as the embodiments of the present invention. However, the present invention is not limited to the above-described examples, and other various embodiments can also be provided.

For example, the pattern 11 according to the related art can be provided together with the adhesive spacers 12. As described above, the basic function of the pattern 11 and the adhesive spacers 12 is, for example, to diffuse the light from the light source toward the backlight surface. This basic function can be assigned to the pattern 11 according to the related art. In this case, the adhesive spacers 12 can be provided to obtain an effect which is difficult to obtain with the basic function, that is, an effect of reducing the brightness unevenness due to the deformation into the undulated shape or the like. Specifically, for example, the pattern 11 according to the related art can be formed on the upper surface 2c of the optical waveguide 2 by printing or molding, and the adhesive spacers 12 may be formed on the lower surface 2b of the optical waveguide 2. In this case, masking and printing can be easily performed in a silk screen printing process or the like for forming the adhesive spacers 12 on the lower surface 2b of the optical waveguide 2. Therefore, the brightness distribution on the display surface of the liquid crystal display apparatus can be easily adjusted. Therefore, the manufacturing time can be reduced and mass production of the product can be performed in a short time. In addition, in the case where the optical waveguide 2 on which the pattern 11 are formed on the upper surface 2c thereof is used as a standard optical waveguide, it is only necessary to prepare a single kind of shaping die (mold or the like). In this case, the pattern 11 is formed of recesses and protrusions formed on the optical waveguide 2 by the shaping die. In the case where only one kind of shaping die is used, the optical waveguide 2 can be standardized. As a result, an advantage that the efficiency in mass production can be increased can be obtained.

In addition, in the above-described example, the adhesive spacers 12 are disposed between the optical waveguide 2 and a reflecting member, such as the reflecting plate 1 or the reflecting sheet 31. However, the adhesive spacers 12 may also be disposed between the optical waveguide 2 and another optical component, such as a diffusing sheet or a prism sheet. Specifically, for example, the adhesive spacers 12 may also be formed between the optical waveguide 2 and the diffusing sheet 3 or between the optical waveguide 2 and the diffusing film 32.

The present application contains subject matter related to that disclosed in Japanese Priority Patent Application JP 2008-320564 filed in the Japan Patent Office on December 17, 2008.

It should be understood by those skilled in the art that various modifications, combinations, sub-combinations and alterations may occur depending on design requirements and other factors insofar as they are within the scope of the appended claims or the equivalents thereof.

## Claims

1. A planar light-emitting apparatus comprising:
a light source (6);
a light-guiding member (2) configured to allow light from the light source (6) to propagate therethrough;
a reflecting member (1) disposed such that the reflecting member (1) faces the light-guiding member (2), the reflecting member (1) reflecting the light propagating through the light-guiding member (2); and
an adhesive member (12) configured to attach the light-guiding member (2) and the reflecting member (1) to each other,
wherein a distribution of an adhesive region of the adhesive member (12) on a surface (2b) of the light-guiding member (2) is determined on the basis of a brightness distribution of the planar light-emitting apparatus in the case where the adhesive member is uniformly distributed on the surface of the light-guiding member (2), and the adhesive member (12) is formed between the light-guiding member (2) and the reflecting member (1) in accordance with the distribution of the adhesive region.

2. The planar light-emitting apparatus according to claim 1, wherein the adhesive member (12) is formed such that the density of the adhesive region of the adhesive member (12) on the light-guiding member (2) increases as a distance from the light source (6) increases.

3. The planar light-emitting apparatus according to claim 2, wherein the adhesive member includes a plurality of dot-shaped adhesive spacers (12), and
wherein the adhesive member is formed such that a dot area of the adhesive spacers (12) increases as the distance from the light source (6) increases.

4. The planar light-emitting apparatus according to claim 1, wherein the adhesive member includes a plurality of line-shaped adhesive spacers (12), and
wherein the adhesive member is formed such that a line width of the adhesive spacers (12) increases as a distance from the light source (6) increases.

5. The planar light-emitting apparatus according to claim 1, wherein a predetermined pattern including recesses and protrusions is formed on the light-guiding member (2).

6. A planar light-emitting apparatus comprising:
a light source (34);
a light-guiding member (2) configured to allow light from the light source (34) to propagate therethrough;
a reflecting member (31) configured to reflect the light propagating through the light-guiding member (2);
an optical member (32) disposed such that the optical member (32) faces the light-guiding member (2); and
an adhesive member (12) configured to attach the light-guiding member (2) and the optical member (32) to each other,
wherein a distribution of an adhesive region of the adhesive member (12) on a surface of the light-guiding member (2) is determined on the basis of a brightness distribution of the planar light-emitting apparatus in the case where the adhesive member is uniformly distributed on the surface of the light-guiding member (2), and the adhesive member (12) is formed between the light-guiding member (2) and the optical member (32) in accordance with the distribution of the adhesive region.

7. The planar light-emitting apparatus according to claim 6, wherein a predetermined pattern including recesses and protrusions is formed on the light-guiding member (2).
